# EUROPÄISCHE PATENTSCHRIFT

(11) **EP 3 201 498 B1**
(45) Veröffentlichungstag und Bekanntmachung des Hinweises auf die Patenterteilung: **25.09.2019**
(21) Anmeldenummer: 15757127.4
(22) Anmeldetag: 05.08.2015
(51) Int. Cl.: F16J 15/3272

(54) **HAKENSCHLOSS FÜR EINE RECHTECKDICHTUNG SOWIE EINE EIN DERARTIGES HAKENSCHLOSS AUFWEISENDE RECHTECKDICHTUNG**
HOOK LOCK FOR A RECTANGULAR SEAL AND A RECTANGULAR SEAL HAVING A HOOK LOCK OF THIS TYPE
SERRURE À CROCHET DESTINÉE À UN JOINT D'ÉTANCHÉITÉ RECTANGULAIRE AINSI QUE JOINT D'ÉTANCHÉITÉ RECTANGULAIRE COMPORTANT UNE SERRURE À CROCHET DE CE TYPE

(30) Priorität: 08.08.2014 DE 102014011532; 08.08.2014 DE 202014006271 U
(43) Veröffentlichungstag der Anmeldung: 09.08.2017
(73) Patentinhaber: Konzelmann GmbH, 74369 Löchgau (DE)
(72) Erfinder: LAAGE, Andreas, 74369 Löchgau (DE); MICHAILIDIS, Michail, 74369 Löchgau (DE)
(74) Vertreter: Leitner, Waldemar
(86) Internationale Anmeldenummer: PCT/EP2015/001609
(87) Internationale Veröffentlichungsnummer: WO 2016/020057

(56) Entgegenhaltungen:
- EP-A1- 2 381 144
- EP-A1- 2 557 337
- GB-A- 324 406
- US-A- 4 361 337
- US-A- 4 844 487

## Beschreibung

Die Erfindung betrifft Hakenschloss für eine Rechteckdichtung, die mindestens ein Paar zusammenwirkender Schließelemente aufweist, wobei ein erstes Schließelement hakenförmig ausgebildet und in das komplementär hierzu ausgebildete zweite Schließelement zum Schließen der Rechteckdichtung eingreift, sowie eine Rechteckdichtung zur Abdichtung einer Durchführung, insbesondere für Fluide, die einen offenen, nicht-metallischen Dichtkörper mit einer Mantelfläche, zwei Flankenflächen und einer Basisfläche sowie ein Schloss zum Verschließen des Dichtkörpers aufweist.

Eine derartige Rechteckdichtung ist allgemein bekannt und wird in einer Dichtungsanordnung zur Abdichtung einer Durchführung, insbesondere einer Drehdurchführung für Fluide, zwischen zwei Bauteilen, insbesondere einer Welle und einem Gehäuse, eingesetzt. Die Welle weist zumindest eine Nut zur Aufnahme der Rechteckdichtung auf. Rechteckdichtungen werden montiert, indem sie aufgeweitet und über die Welle bis zu der sie aufnehmenden Nut geschoben werden. Das Schloss der Rechteckdichtung soll hierbei ein möglichst elastisches Aufdehnen des ringförmigen Dichtkörpers der Rechteckdichtung ermöglichen.

Rechteckdichtungen für Durchführungen, insbesondere für Drehdurchführungen, sind in der Regel aus thermoplastischen oder auch duromeren Polymerwerkstoffen gefertigt und weisen ein plastisch-elastisches Verformungsverhalten auf. Aus diesen Werkstoffen gefertigte Rechteckdichtungen erfahren also beim Montieren eine zum Teil plastische Deformation. Wird die bleibende Deformation der Rechteckdichtung zu groß, kann es bei der Montage der Rechteckdichtung zu einer Beschädigung des Dichtkörpers kommen: Tritt z. B. durch eine zu große Aufweitung des Dichtkörpers der Rechteckdichtung eine Überdeckung auf, bei der eine Kante des Gehäuses flächig auf die Flankenfläche des ringförmigen Dichtkörpers trifft, kann dies leicht zu Beschädigungen führen.

Die EP 2 557 337 A1 beschreibt einen Dichtring, der einen Grundkörper mit zumindest einem mit einem weiteren Endabschnitt verbindbaren Endabschnitt aufweist. Hierbei ist vorgesehen, dass der erste Endabschnitt einen Verriegelungsvorsprung mit einer Führungsfläche aufweist, die bezüglich einer Führungsebene in Anlage eine Führungsfläche eines Führungsabschnitts des zweiten Endabschnitts bringbar ist. Dieser zweite Endabschnitt weist einen Verriegelungsvorsprung mit einer Stützfläche auf, die bezüglich der Führungsebene in Anlage an eine Stützfläche eines Führungsabschnitts des ersten Endabschnitts bringbar ist. Die Verriegelungsvorsprünge hintergreifen einander in einer Verriegelungsposition,

Aus der GB 324 406 A ist ein Kolbenring bekannt, dessen freie Enden hakenartige Verriegelungselemente aufweisen, die zum Öffnen und Schließen des Kolbenrings in axialer Richtung zueinander bewegt werden.

Die US 2009/0 194 948 A1 beschreibt ein Hakenschloss für eine Rechteckdichtung sowie eine derartige Rechteckdichtung. Das Hakenschloss weist ein erstes Schließelement und ein mit diesem zusammenwirkendes zweites Schließelement auf. Das erste Schließelement ist hakenförmig ausgebildet und besitzt eine Umfangrichtung des Dichtkörpers verlaufende Zunge mit einer Ausnehmung, an deren Ende ein radialer Vorsprung vorgesehen ist. Das zweite Schließelement ist komplementär hierzu ausgebildet, sodass im geschlossenen Zustand der Vorsprung der Zunge des ersten Schließelements in eine entsprechend geformte Ausnehmung des zweiten Schließelements eintaucht und ein Vorsprung der Zunge des zweiten Schließelements in eine entsprechende Ausnehmung des ersten Schließelements eintaucht. Hierdurch wird eine Abdichtung in radialer Richtung ausgebildet. In axialer Richtung ist aber das Hakenschloss durchgängig, da Flüssigkeit zwischen den aufeinander liegenden Außenkonturen der Vorsprünge und Ausnehumg der Schließelemente durchtreten kann.

Die US 4 844 487 A beschreibt eine Rechteckdichtung mit einem Hakenschloss, wobei die beiden freien Enden des Hakenschlosses zum Verschließen in axialer Richtung gegeneinander bewegt werden.

Die US 2010/0 032 0217 A1 beschreibt eine ähnliche Konstruktion, bei der ein Vorsprung eines ersten Schließelements in eine entsprechend geformte Ausnehmung eines zweiten Schließelements eintaucht, sodass in axialer Richtung keine Abdichtung gegeben ist.

Auch das Engineer's Handbook of Piston Rings, Seal Rings, Mechanical Shaft Seals, herausgegeben von Koppers Company inc., 1975 beschreibt eine derartige Konstruktion,

Aus der EP 2 381 144 A1 ist eine Rechteckdichtung bekannt, die an ihrem ersten Ende eine vorspringende Zunge aufweist, die im geschlossenen Zustand in eine erste Aufnahme des zweiten Endes eintaucht. In entsprechender Art und Welse weist das zweite Ende des Grundkörpers der aus der o. g. Druckschrift bekannten Rechteckdichtung wiederum eine in Umfangsrichtung vorspringende Zunge auf, die in eine entsprechende Ausnehmung des ersten Endes des Grundkörpers eintaucht. Die beiden Zungen sind verschiebbar in den jeweiligen Ausnehmungen angeordnet, so dass die beiden Zungen bei einer Aufweitung der Rechteckdichtung in den Ausnehmungen gleiten können. Des weiteren sind Freiräume vorgesehen, die eine Passage für eine Flüssigkeit ausbilden. Der in eine entsprechende Bohrung eingesetzte Ring erlaubt es somit, dass Flüssigkeit von einer Seite des Rings zu der anderen geleitet wird.

Es ist des Weiteren bekannt, Hakenschlösser bei Rechteckdichtungen aus metallischen Werkstoffen, wie z. B. Grauguß, einzusetzen. Die US 4 361 337 A beschreibt z. B. einen Kolben, der aus einem Gußeisen hergestellt ist. Hierbei ist vorgesehen, dass ein Ende des Kolbenrings eine schräg verlaufende Ausnehmung und das andere Ende einen schräg verlaufenden Vorsprung aufweist, so dass der Vorsprung zum Schließen des Hakenschlosses von der Seite des Grundkörpers eingeführt werden kann. Aus fertigungstechnischen Gründen kann hierbei aber das Schloss nicht so ausgeführt werden, dass es mit einer geringen Leckage schließt. Vielmehr entspricht diese Leckage in radialer Richtung der eines offenen Stoßes. Insbesondere ist eine Rechteckdichtung, die ein derartiges Hakenschloss verwendet, in axialer Richtung durchgängig.

Zur Montage der Welle im Gehäuse wird die Welle zusammen mit der in ihrer Nut aufgenommenen Rechteckdichtung in eine Drehführung des Gehäuses eingeschoben oder das Gehäuse wird auf die bereits vormontierte Welle aufgeschoben. Es findet somit eine Relativbewegung zwischen der Welle und dem Gehäuse statt. Im montierten Zustand liegt die Mantelfläche der in der Nut der Welle eingesetzten Rechteckdichtung an der Innenwand der Durchführung des Gehäuses an und dichtet derart den zwischen der Welle und der Innenfläche der Drehdurchführung befindlichen Dichtspalt ab. Hierzu muss die Rechteckdichtung über die Oberfläche der Welle hinaus stehen, damit der zwischen der Welle und dem Gehäuse befindliche Dichtspalt durch die Dichtmasse der Rechteckdichtung abgedichtet werden kann.

Da der Dichtspalt oft nur wenige Bruchteile eines Millimeters beträgt, besteht beim Einschieben der mit der Rechteckdichtung versehenen Welle in die Drehdurchführung die Gefahr, dass dabei die Rechteckdichtung beschädigt wird. Eine Leckage einer diese Rechteckdichtung verwendenden Dichtungsanordnung ist dann nicht auszuschließen. Die beschädigungsfreie Montage einer bekannten Rechteckdichtung in einer Durchführung, insbesondere einer Drehdurchführung, erfordert daher einen hohen Montageaufwand und ist folglich zeitaufwendig.

Es ist Aufgabe der vorliegenden Erfindung, ein Hakenschloss für eine Rechteckdichtung derart weiterzubilden, dass auch in axialer Richtung eine hinreichend große Abdichtung gegeben ist. Die Erfindung betrifft auch eine ein derartiges Hakenschloss verwendende Rechteckdichtung.

Diese Aufgabe wird erfindungsgemäß dadurch gelöst, dass das erste Schließelement eine Zunge sowie eine Ausnehmung und das zweite Schließelement eine weitere Zunge sowie eine weitere Ausnehmung besitzt dass die Ausnehmungen jeweils durch einen Boden und eine Wand des verbleibenden Bereichs des Dichtkörpers ausgebildet sind, dass im Schließzustand des Hakenschlosses in radialer Richtung die Zunge des ersten Schließelements in die korrespondierende Ausnehmung des zweiten Schließelements und die Zunge des zweiten Schließelements in die korrespondierende Ausnehmung des ersten Schließelements eintaucht, dass in axialer Richtung die Zunge des ersten Schließelements über der Wand der Ausnehmung des zweiten Schließelements und die Zunge des zweiten Schließelements über der Wand des ersten Schließelements liegt, dass in radialer Richtung die Zunge über dem Boden der Ausnehmung des zweiten Schließelements und die weitere Zunge über dem Boden der Ausnehmung des ersten Schließelements liegt, und dass mindestens eine der Zungen ein radial nach innen vorspringendes Rastelement und die korrespondierende Ausnehmung eine Rastaufnahme für dieses Rastelement aufweist, in welche das Rastelement zum Schließen des Hakenschlosses einbringbar ist.

Durch die erfindungsgemäßen Maßnahmen wird in vorteilhafter Art und Weise ein Hakenschloss sowie eine ein derartiges Hakenschloss verwendende Rechteckdichtung geschaffen, welche sich dadurch auszeichnen, dass durch die erfindungsgemäße Ausbildung und Anordnung der Schließelemente des Hakenschlosses eine sowohl in radialer als auch in axialer Richtung hinreichend gute Abdichtung der das erfindungsgemäße Hakenschloss verwendenden Rechteckdichtung erreicht wird. Die erfindungsgemäße Rechteckdichtung kann bei ihrer Montage in aufgeweitetem Zustand über das entsprechend Bauteil einer Dichtungsanordnung, insbesondere eine Welle, geschoben werden, so dass der Gefahr einer zu großen Aufweitung der Rechteckdichtung bei ihrer Montage entgegengewirkt wird. Nach dem Schließen des erfindungsgemäßen Hakenschlosses der erfindungsgemäßen Rechteckdichtung ist daher in vorteilhafter Art und Weise eine radiale sowie eine axiale Abdichtung gegeben. Das erfindungsgemäße Hakenschloss sowie die erfindungsgemäße Rechteckdichtung zeichnen sich also durch eine zweidimensionale Abdichtwirkung, nämlich sowohl in axialer als auch in radialer Richtung, aus. Dies stellt einen entscheidenden Vorteil gegenüber den bekannten, bei Rechteckdichtringen aus metallischen Werkstoffen eingesetzten Hakenschlössern dar, da metallische Rechteckdichtungen mit einem derartigen Hakenschloss - wie eingangs ausgeführt - nur eine radiale Abdichtung bewirken können, wobei das bei diesen metallischen Rechteckdichtringen eingesetzte Hakenschloss auch in radialer Richtung nicht hinreichend dicht schließt, da es seiner Bauform nach der eines offenen Stoßes entspricht. Durch die erfindungsgemäßen Maßnahmen wird also eine Rechteckdichtung ausgebildet, die entlang ihres gesamten Umfangs, also auch im Bereich ihres Hakenschlosses, sowohl in axialer als auch in radialer Richtung hinreichend gut abdichtet.

Ein weiterer Vorteil der erfindungsgemäßen Maßnahmen besteht darin, dass die Schlosskontur des Hakenschlosses sowie die dieses Hakenschloss verwendende Rechteckdichtung einfach, z. B. durch ein Spritzgußverfahren, hergestellt werden kann. Auch kann in vorteilhafter Art und Weise ein Kalibrationsvorgang, um den angestrebten Anlieferungsdurchmesser der erfindungsgemäßen Rechteckdichtung einzustellen, in einer Vielzahl von Fällen entfallen.

Eine vorteilhafte Weiterbildung der erfindungsgemäßen Rechteckdichtung sieht vor, dass diese zumindest ein in einer Flankenfläche vorgesehenes und zumindest entlang eines Teils des Umfangs des Dichtkörpers umlaufendes Einführelement aufweist. Eine derartige Maßnahme besitzt den Vorteil, dass die Gefahr einer Beschädigung der Rechteckdichtung bei ihrer Montage in eine Dichtungsanordnung wenn nicht eliminiert, dann doch zumindest deutlich reduziert ist. Das erfindungsgemäß vorgesehene Einführelement bewirkt, dass beim Einführen der erfindungsgemäße Rechteckdichtung in eine Durchführung deren Randbereich, der bei diesem Vorgang in Kontakt dem erfindungsgemäß vorgenannten Einführelement der Flankenfläche tritt, dieser Randbereich auf den Dichtkörper der Rechteckdichtung aufgleitet, so dass die Gefahr einer Beschädigung des Dichtkörpers und somit der Dichtmasse der Rechteckdichtung in diesem Bereich zumindest reduziert wird.

Eine weitere vorteilhafte Weiterbildung der Erfindung sieht vor, dass die erfindungsgemäße Rechteckdichtung an beiden Flankenflächen jeweils ein sich über zumindest einen Teil des Umfangs erstreckendes Einführelement aufweist. Eine derartige Maßnahme besitzt den Vorteil, dass hierdurch bei der Montage der erfindungsgemäßen Rechteckdichtung nicht mehr auf ihre Orientierung in der sie aufnehmenden Nut geachtet werden muss.

Eine weitere vorteilhafte Weiterbildung der Erfindung sieht vor, dass mindestens ein Einführelement als eine Einführfase ausgebildet ist. Eine derartige Maßnahme besitzt den Vorteil, dass das Einführelement besonders einfach ausgebildet ist.

Eine weitere vorteilhafte Weiterbildung der Erfindung sieht vor, dass die erfindungsgemäße Rechteckdichtung an ihrer Mantelfläche eine hydrostatische oder hydrodynamische Entlastungsstruktur aufweist. Eine derartige Maßnahme besitzt den Vorteil, dass hierdurch der Dichtkörper der erfindungsgemäßen Rechteckdichtung entlastet wird.

Weitere vorteilhafte Weiterbildungen der Erfindung sind Gegenstand der Unteransprüche.

Weitere Einzelheiten und Vorteile der Erfindung sind dem Ausführungsbeispiel zu entnehmen, das im Folgenden anhand der Figuren beschrieben wird. Es zeigen:
- Figur 1: eine perspektivische Darstellung einer Rechteckdichtung mit einem Ausführungsbeispiel eines Hakenschlosses,
- Figur 2: eine vergrößerte Darstellung des Ausführungsbeispiels des Hakenschlosses der Figur 1,
- Figur 3: eine Draufsicht auf das Hakenschloss,
- Figur 4: das Hakenschloss der Figur 1 in geöffnetem Zustand,
- Figur 5: das Hakenschloss in einer Ansicht der Richtung V der Figur 4,
- Figur 6: eine Ansicht eines ersten Schließelements des Hakenschlosses,
- Figur 7: eine Ansicht eines zweiten Schließelements des Hakenschlosses,
- Figur 8: eine Draufsicht auf das erste Ausführungsbeispiel der Figur 1,
- Figur 9: eine Schnittansicht des ersten Ausführungsbeispiels,
- Figur 10: einen Querschnitt durch das erste Ausführungsbeispiel in vergrößertem Maßstab,
- Figur 11: eine schematische Darstellung einer die Rechteckdichtung der Figur 1 verwendenden Dichtungsanordnung,
- Figur 12: eine Darstellung eines zweiten Ausführungsbeispiels einer Rechteckdichtung mit einem Hakenschloß,
- Figur 13: eine schematische Darstellung einer die Rechteckdichtung gemäß dem zweiten Ausführungsbeispiel verwendenden Dichtanordnung, und
- Figur 14: eine Darstellung eines dritten Ausführungsbeispiels einer Rechteckdichtung.

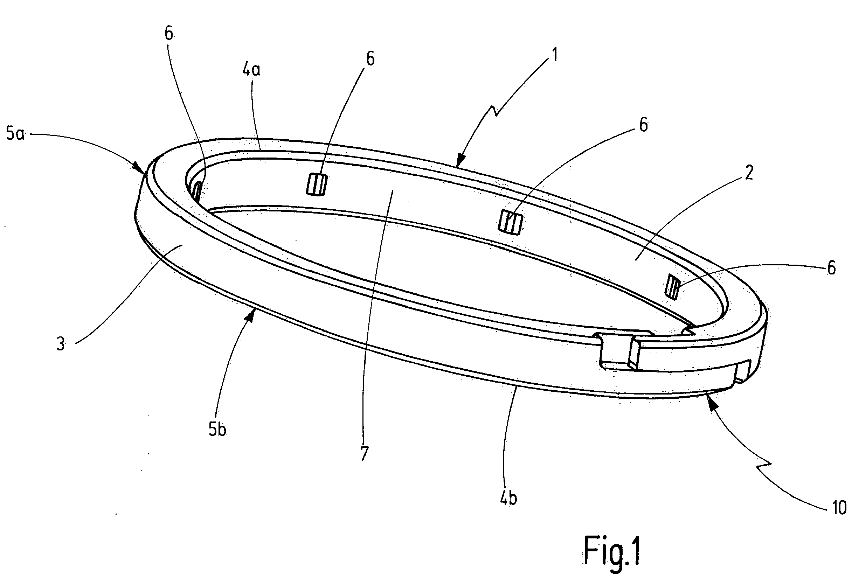

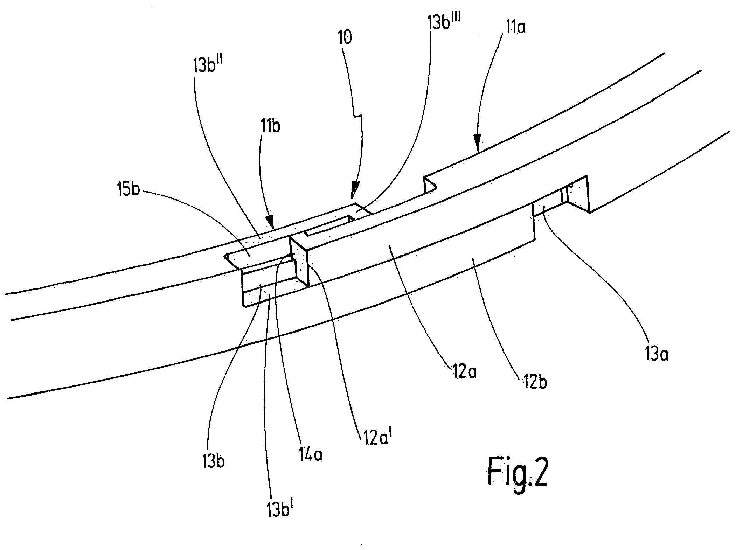

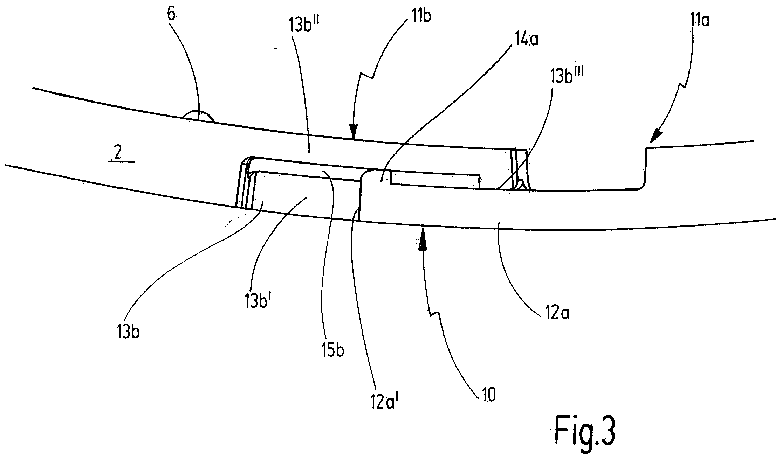

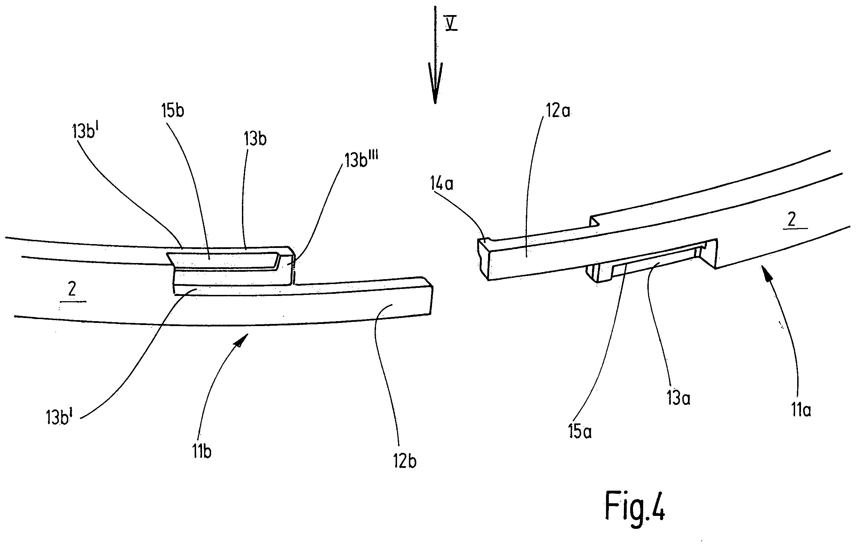

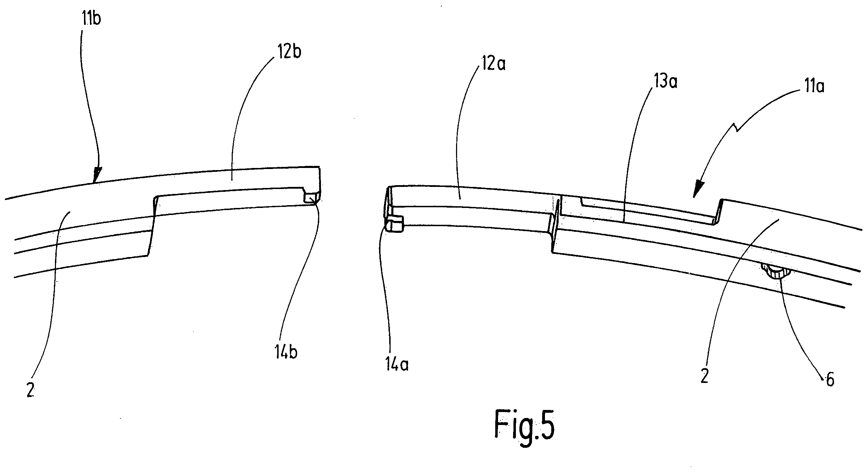

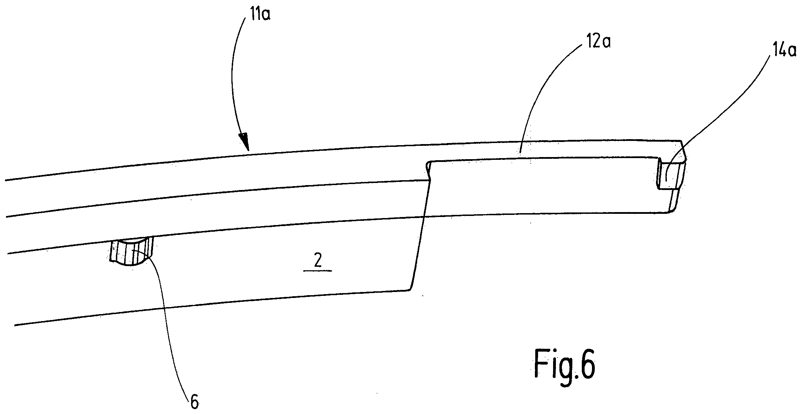

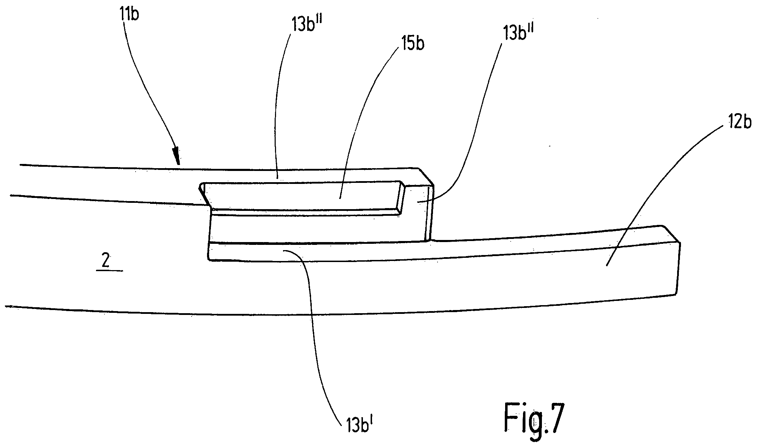

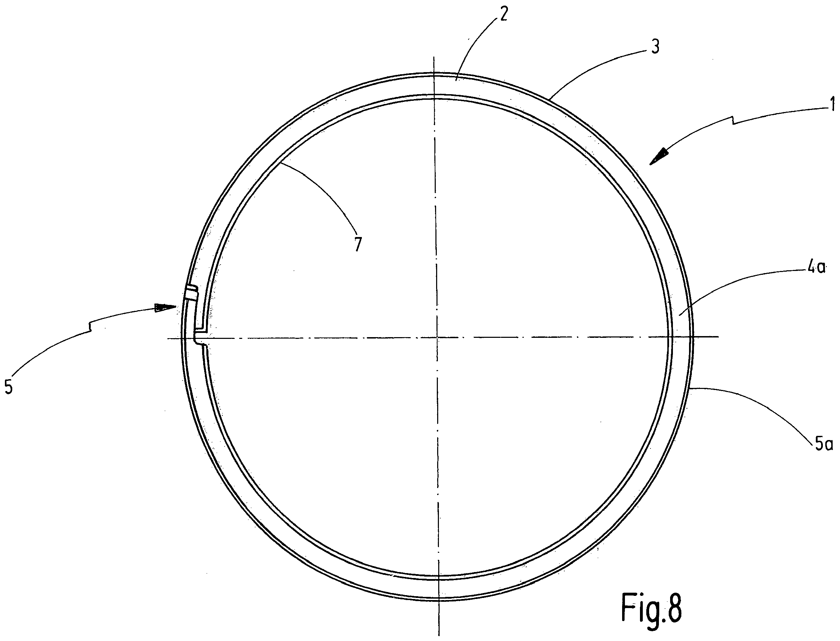

In Figur 1 sowie in den Figuren 8 bis 10 ist eine allgemein mit 1 bezeichnete Rechteckdichtung dargestellt, die einen Dichtkörper 2 mit einer Mantelfläche 3 und zwei Flankenflächen 4a und 4b aufweist. Die Rechteckdichtung 1 weist ein Schloss 5 auf, welches hier als ein Hakenschloss 10 ausgebildet ist, welches im Folgenden anhand der Figuren 2 bis 7 beschrieben wird. Der Dichtkörper 2 ist aus einem nicht-metallischen Werkstoff, insbesondere einem thermoplastischen oder duroplastischen Material hergestellt. Eine derartige Rechteckdichtung ist bekannt und muss daher nicht mehr näher beschrieben werden.

Wie aus diesen Figuren ersichtlich ist, weist das Hakenschloss 10 ein erstes Schließelement 11a und ein zweites Schließelement 11b auf, welche ineinander greifen und derart den offenen Dichtkörper 2 der Rechteckdichtung 1 zu einem geschlossenen Ring verbinden und sowohl in radialer als auch in axialer Richtung eine Abdichtung ausbilden. Dem Fachmann ist bekannt, dass in diesem Zusammenhang der Begriff "Abdichtung" die Einhaltung einer kritischen Fluid- oder Gasleckage bezeichnet wird, wobei die Größenordnung dieser Leckage je nach Anwendung recht unterschiedlich sein kann und für den Einzelfall definiert werden muss.

Das in Figur 2 rechte Schließelement 11a weist eine in Umfangsrichtung des Dichtkörpers 2 verlaufende Zunge 12a auf, die eine Länge I besitzt und sich über einen definierten Umfangsbereich des Dichtkörpers 2 erstreckt. An ihrem vorderen Ende 12a' ist ein radial nach innen vorspringendes Rastelement 14a angeordnet, so dass die Zunge 12a samt dem Rastelement 14a im Ringquerschnitt gesehen eine hakenartige oder L-förmige Form aufweist.

Die Zunge 12a sowie das Rastelement 14a des ersten Schließelements 11a wirken mit dem komplementär hierzu ausgebildeten zweiten Schließelement 11b zusammen, welches eine in Umfangsrichtung des ringförmigen Dichtkörpers verlaufende Ausnehmung 13b sowie eine Rastaufnahme 15b besitzt. Die Ausnehmung 13b weist hierbei wiederum eine Länge I auf, die der Länge der Zunge 12a des ersten Schließelements 11a entspricht, wobei ein die Ausnehmung 13b in begrenzende Boden 13b' durch den Dichtkörper 2 ausgebildet wird. In axialer Richtung wird die Ausnehmung 13b durch eine Wand 13b" begrenzt, die durch den verbleibenden Bereich des Dichtkörpers 2 ausgebildet ist. In Umfangsrichtung wird die Ausnehmung 13b durch ein mit dem Rastelement 14a zusammenwirkendes Anschlagselement 13b'" begrenzt. In radialer bzw. axialer Richtung sind hierbei die Dicke und somit die radiale Erstreckung der Zunge 12a und die Tiefe der Ausnehmung 13b vorzugsweise derart aufeinander abgestimmt, dass deren Summe gleich der radialen bzw. axialen Erstreckung des Dichtkörpers 2 der Rechteckdichtung 1 ist, sodass die radiale Ausdehnung des Hakenschlosses 10 im Wesentlichen gleich der radialen Erstreckung des Dichtkörpers 2 ist. Hierdurch wird erreicht, dass durch die Schließelemente 11a, 11b des Hakenschlosses 10 keine nennenswerte Schwächung des Dichtkörpers 2 der Dichtung 1 in diesem Bereich eintritt.

Die Zunge 12a kann somit in die Ausnehmung 13b des zweiten Schließelements 11b eingelegt werden und überdeckt hierbei deren Boden 13b', wobei das nasenartig ausgebildete Rastelement 14a des ersten Schließelements 11a in die Aufnahme 13b des zweiten Schließelements 11b eintaucht, wodurch der Dichtkörper 2 der Rechteckdichtung 1 in Umfangsrichtung geschlossen wird. Die in radialer Richtung übereinander liegenden und sich dabei überdeckenden Bauelemente, also die Zunge 12a und der Boden 13b' der Ausnehmungen 13b bilden hierbei eine radiale Abdichtung 16 der Rechteckdichtung 1 aus.

Um eine axiale Abdichtung bereitzustellen, ist vorgesehen, dass auch das zweite Schließelement 11b eine der Zunge 12a des ersten Schließelements 11a entsprechende Zunge 12b aufweist, die sich über eine Länge I in Umfangsrichtung des ringförmigen Dichtkörpers 2 erstreckt. Beim hier beschriebenen Ausführungsbeispiel sind also die Zungen 12a und 12b spiegelsymmetrisch angeordnet. In entsprechender Art und Weise besitzt das erste Schließelement 11a eine der Ausnehmung 13b entsprechende Ausnehmung 13a, deren Boden 13a', Wand 13a" und Anschlagelement 13a"'durch entsprechende Bereiche des Dichtkörpers 2 ausgebildet werden. Die zweite Zunge 12b kann somit in die Ausnehmung 13a des ersten Schließelements 11a eingebracht werden, so dass sich die Zunge 12b und der den Boden 13a' der Ausnehmung 13a ausbildende Bereich des Dichtkörpers 2 bei geschlossenem Hakenschloss 10 überdecken. Hierdurch wird nicht nur eine radiale Abdichtung des Hakenschlosses 10 ausgebildet, sondern auch eine axiale Abdichtung: In axialer Richtung gesehen liegt die Zunge 12a vor der Wand 13b" der Ausnehmung 13b und die Zunge 12b liegt in axialer Richtung hinter der Wand 13a" der Ausnehmung 13a, sodass sich diese Bereiche jeweils überdecken und derart die vorstehend angesprochene axiale Abdichtung des Hakenschlosses 10 und somit der dieses Hakenschloss 10 verwendenden Rechteckdichtung 1 bewirken.

Die Zunge 12b besitzt auch eine dem Rastelement 14a entsprechendes Rastelement 14 und die Ausnehmung 13a eine der Rastaufnahme 15b entsprechende Rastaufnahme 15a. Dieser spiegelsymmetrische Aufbau der beiden Schließelemente 11a und 11b besitzt den Vorteil, dass beim Einsetzen der Rechteckdichtung 1 in einer Dichtanordnung 20 nicht auf deren Orientierung geachtet werden muss, da das derart ausgebildete Hakenschloss 10 in axialer Richtung eine bidirektionale Abdichtung besitzt.

Dem Fachmann ist aus der obigen Beschreibung ersichtlich, dass die Ausbildung des vorstehend beschriebenen Hakenschlosses 10 vereinfacht werden kann, wenn eine doppelte Verriegelung des Dichtkörpers 2, wie sie durch die zusammenwirkenden Verriegelungselemente, nämlich durch das Rastelement 14a des ersten Schließelements 11a und die Rastaufnahme 15b des zweiten Schließelements 11b sowie das Rastelement 14b und die Rastaufnahme 15a ausgebildet wird, nicht benötigt wird. In diesem Fall kann eines der beiden Verriegelungselemente, z. B. das Rastelement 14b des zweiten Schließelements 11b und die mit ihm zusammenwirkende Rastaufnahme 15a entfallen, so dass das Verschließen des Dichtkörpers 2 der Rechteckdichtung 1 nur durch das Rastelement 14a und die mit ihm zusammenwirkende Rastaufnahme 15b erfolgt. Die Zunge 12b besitzt dann folglich kein Rastelement 14b und die Rastaufnahme 15a entfällt daher ebenfalls. Die Zunge 12b ist dann ohne eine Verrastung in der Aufnahme 13a aufgenommen und dichtet derart das Hakenschloss 10 und somit die Rechteckdichtung 1 in axialer Richtung ab.

Soll keine wie in den Figuren 1 bis 7 doppelte Verriegelung der Enden des Dichtkörpers 2 erfolgen, so kann unter Umständen auch die Zunge 12b entfallen, so dass zwar das zweite Schließelement 11b die Aufnahme 13b für die Zunge 12a des ersten Schließelements 11a besitzt, beim ersten Schließelement 11a aber die Aufnahme 13a nicht vorhanden ist. Dies kann für Anwendungsfälle, bei denen die radiale Abdichtung des Hakenschlosses 10 nicht von wesentlicher Bedeutung ist, durchaus ausreichend sein.

Dem Fachmann ist aus obiger Beschreibung ersichtlich, dass es nicht zwingend ist, dass die Erstreckung der ersten Zunge 12a und der zweiten Zunge 12b in Umfangsrichtung jeweils gleich ist. Es ist dann auch möglich, die Zungen 12a, 12b und folglich die mit diesem zusammenwirkenden Ausnehmungen 13a und 13b mit unterschiedlichen Längen I auszubilden, so dass dann ein asymmetrischer Aufbau des Hakenschlosses 10 gegeben ist.

Mindestens eines der beiden Rastelemente 13a und 13b ist dabei derart ausgebildet, dass es beim Schließen des Hakenschlosses 10 in die mit ihm zusammenwirkende Rastaufnahme 15a bzw. 15b einschnappt. Hierdurch wird erreicht, das nach dem Schließen des Hakenschlosses 10 ein unbeabsichtigtes wieder Öffnen des Hakenschlosses 10 unterbunden wird.

Wie am besten aus der Figur 1 ersichtlich ist, ist bei der Rechteckdichtung 1 an mindestens einer und im hier gezeigten Fall an beiden Flankenflächen 4a und 4b jeweils ein Einführelement 5a bzw. 5b angeordnet ist. Die beiden Einführelemente 5a und 5b gehen in die Mantelfläche 3 über und verlaufen hierbei vorzugsweise entlang des gesamten Umfangs des Dichtkörpers 2. Es kann aber für gewisse Anwendungsfälle auch ausreichend sein, dass eines oder beide Einführelemente 5a und 5b jeweils nur entlang eines Teilbereichs des Umfangs des Dichtkörpers 2 verlaufen. Diese Einführelemente 5a und 5b dienen dazu, dass - wie nachstehend beschrieben - beim Einführen der Rechteckdichtung 1 in eine Durchführung 21 einer Dichtungsanordnung 20 der Randbereich R des diese Durchführung 21 begrenzenden Gehäuses G (siehe Figur 2) dieser Durchführung auf der jeweiligen Einführschräge 5a oder 5b aufgleiten kann. Hierdurch wird die Gefahr, dass beim Einführen der Rechteckdichtung 1 in die Durchführung 21 - z. B. infolge eines Verkantens - der in Kontakt mit der Rechteckdichtung 1 tretende Materialbereich der Durchführung 21 den Dichtkörper 2 beschädigt, wenn nicht vollständig eliminiert, dann doch zumindest deutlich reduziert wird.

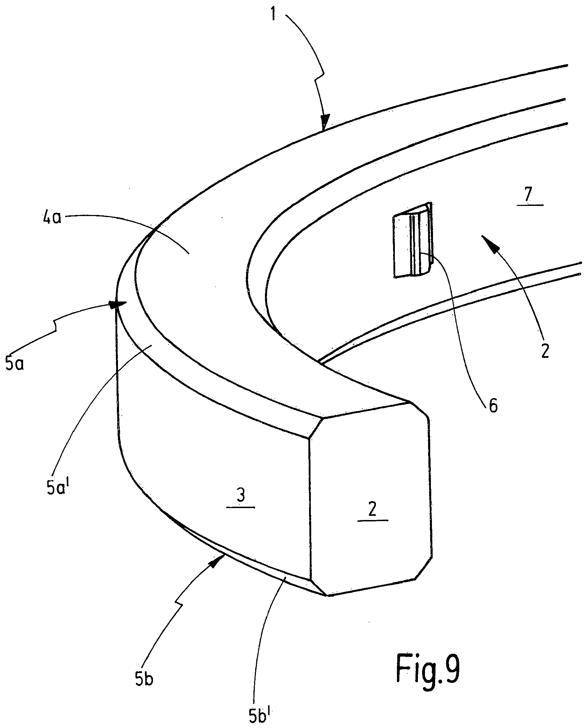

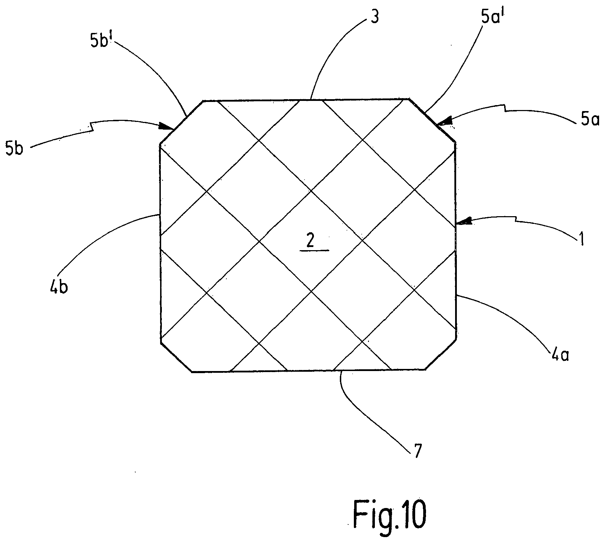

Wesentlich ist nun, dass - wie am besten aus den Figuren 9 und 10 ersichtlich ist - an mindestens einer und im hier gezeigten ersten Ausführungsbeispiel an beiden Flankenflächen 4a und 4b jeweils ein Einführelement 5a bzw. 5b angeordnet ist. Die beiden Einführelemente 5a und 5b gehen in die äußere Mantelfläche 3 über und verlaufen hierbei vorzugsweise entlang des gesamten Umfangs des Dichtkörpers 2. Es kann aber für gewisse Anwendungsfälle auch ausreichend sein, dass eines oder beide Einführelemente 5a und 5b jeweils nur entlang eines Teilbereichs des Umfangs des Dichtkörpers 2 verlaufen.

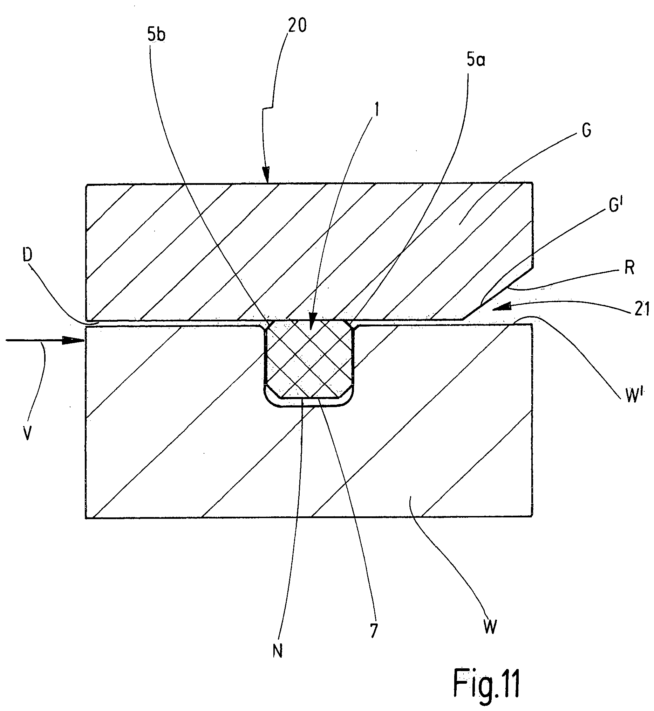

Diese Einführelemente 5a und 5b dienen dazu, dass - wie nachstehend beschrieben - beim Einführen der Rechteckdichtung 1 in eine Durchführung 21 einer Dichtungsanordnung 20 der Randbereich R des diese Durchführung 21 begrenzenden Gehäuses G (siehe Figur 11) dieser Durchführung auf der jeweiligen Einführschräge 5a oder 5b aufgleiten kann. Hierdurch wird die Gefahr, dass beim Einführen der Rechteckdichtung 1 in die Durchführung 21 - z. B. infolge eines Verkantens - der in Kontakt mit der Rechteckdichtung 1 tretende Materialbereich der Durchführung 21 den Dichtkörper 2 beschädigt, wenn nicht vollständig eliminiert, dann doch zumindest deutlich reduziert wird.

Der radiale Verlauf beider oder mindestens eines Einführelements 5a und/oder 5b ist dabei dergestalt, dass das Einführelement 5a und/oder 5b zumindest an der Stelle beginnt, an der die Rechteckdichtung 1 aus der Nut N einer Welle W (siehe Figur 11) hervortritt, und dass eines oder beide Einführelemente 5a, 5b vorzugsweise im Übergangsbereich zwischen Flankenfläche 4a bzw. 4b und der äußeren Mantelfläche 3 enden.

Die Einführelemente 5a und 5b sind im hier gezeigten Ausführungsbeispiel als Einführfasen 5a' und 5b' ausgebildet. Eine derartige Maßnahme besitzt den Vorteil einer besonders einfachen Ausbildung der Einführelemente 5a und 5b. Es ist aber nicht zwingend erforderlich, dass die Einführelemente 5a und 5b über ihren gesamten Bereich schräg verlaufen. Vielmehr kann dieser Bereich auch gekrümmt ausgebildet sein oder es ist auch möglich, dass der letzte Bereich der Einführelemente 5a und 5b, d. h. der kurz vor der äußeren Mantelfläche 3 liegende Bereich, radial ausgerichtet ist, d. h., dass also eine Art "Stufe" verwirklicht ist.

In Figur 11 ist nun schematisch die Dichtungsanordnung 20 gezeigt, anhand derer die Einbausituation der Rechteckdichtung 1 in eine Durchführung 21 sowie deren Montagevorgang erläutert werden soll. Die Figur 11 zeigt einen Querschnitt durch eine derartige Dichtungsanordnung 20, welche rotationssymmetrisch zu einer Achse A ausgebildet ist. Ein Gehäuse G weist die Drehdurchführung 21 auf, in der eine Welle W eingesetzt ist. Zwischen der Außenfläche W' der Welle W und der Innenfläche G' des Gehäuses G, welches die Drehdurchführung 21 begrenzt, ist ein Dichtspalt D vorhanden, der durch die Rechteckdichtung 1 abgedichtet werden soll. Dem Fachmann ist bekannt, dass in diesem Zusammenhang der Begriff "Abdichtung" die Einhaltung einer kritischen Fluid- oder Gasleckage bezeichnet wird, wobei die Größenordnung dieser Leckage je nach Anwendung recht unterschiedlich sein kann und für den Einzelfall definiert werden muss.

Zur Ausbildung der gezeigten Dichtungsanordnung 20 wird zuerst die Rechteckdichtung 1 in die Nut N der Welle W eingesetzt. Dies kann dadurch geschehen, dass die Rechteckdichtung 1 aufgeweitet, dann auf die Welle W aufgeschoben und schließlich bis zur Nut N, in der sie plaziert werden soll, weiterbewegt und in die Nut N eingebracht wird.

Nachdem die Rechteckdichtung 1 derart in die Nut N der Welle W eingebracht wurde, wird die Welle W in die in diesem Fall als Drehdurchführung ausgebildete Durchführung 21 eingeschoben. Der Außendurchmesser der Welle W ist um das Maß des Dichtspalts D kleiner als der durch die Innenwand G' des Gehäuses G definierte Durchmesser der Durchführung 21. Da die Rechteckdichtung 1 im montierten Zustand dieser dynamischen Dichtungsanordnung 20 den Dichtspalt D dadurch verschließen muss, dass ihre Mantelfläche 3 an der Innenwand G' des Gehäuses G anliegt, steht die Nut N der Welle W eingesetzte Rechteckdichtung 1 zumindest um das Maß des Dichtspalts D über deren Außenfläche W' vor. In der Regel wird aber die Rechteckdichtung 1 derart ausgebildet, dass ihr durch die Mantelfläche 2 festgelegter Außendurchmesser größer als die Summe aus dem Außendurchmesser der Welle W und dem Maß des Dichtspalts D ist, so dass nach dem Einsetzen der Rechteckdichtung 1 in die Dichtungsanordnung 20 die Mantelfläche 3 des Dichtkörpers 2 gegen die Innenfläche G' des Gehäuses G gepresst wird. Das Einsetzen des vor der in der Nut N montierten Rechteckdichtung 1 liegenden Bereichs der Welle W in die Durchführung 21 ist in der Regel problemlos möglich, da der Außendurchmesser der Welle W um den Dichtspalt D geringer ist als der Durchmesser der Durchführung 21. Wird nun die in der Nut N eingesetzte Rechteckdichtung 1 in die Durchführung 21 eingeführt, so tritt der Randbereich R des Gehäuses G in Kontakt mit dem in Einführrichtung V vorne liegenden Flankenbereich, hier des Flankenbereichs 4a. Die beschriebene Rechteckdichtung 1 weist in vorteilhafter Art und Weise das hier als Einführfase 5a' ausgebildete Einführelement 5a auf, welches von der Mantelfläche 3 zur ersten Flankenfläche 4a geneigt verläuft. Der Randbereich R des Gehäuses G gleitet dann beim Vorschub der Welle W in Einführrichtung V auf das Einführelement 5a auf. Hierdurch wird die Gefahr der Beschädigung des Dichtkörpers 2 wenn nicht eliminiert, zumindest reduziert. Dem Fachmann ist ersichtlich, dass durch die beschriebene Ausgestaltung der Rechteckdichtung 1 mit Einführelementen 5a und 5b das Einsetzen der Rechteckdichtung 1 in die Dichtanordnung 20 insbesondere dann erleichtert wird, wenn der Randbereich R des Gehäuses G, der beim Vorschub der Welle W auf das Einführelemente 5a aufgleitet, nicht - wie in Figur 11 dargestellt - abgeschrägt ausgeführt ist.

In der Mantelfläche 3 der Rechteckdichtung 1 des ersten und des zweiten Ausführungsbeispiels können optional weitere hydrodynamische oder hydrostatische Entlastungsstrukturen vorgesehen sein.

Bei der beschriebenen Rechteckdichtung ist noch vorgesehen, dass an einer Innenfläche 2' des Dichtkörpers 2 Erhebungen 6 vorgesehen sind, welche ein zu großes Durchhängen der in eine Nut der Dichtungsanordnung 20 (siehe Figur 11) eingesetzten Rechteckdichtung 1 verhindert.

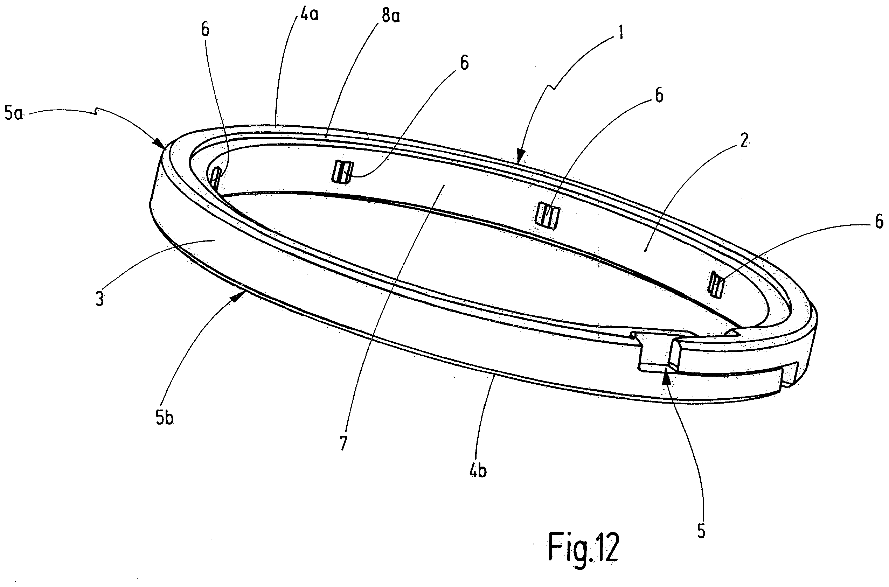

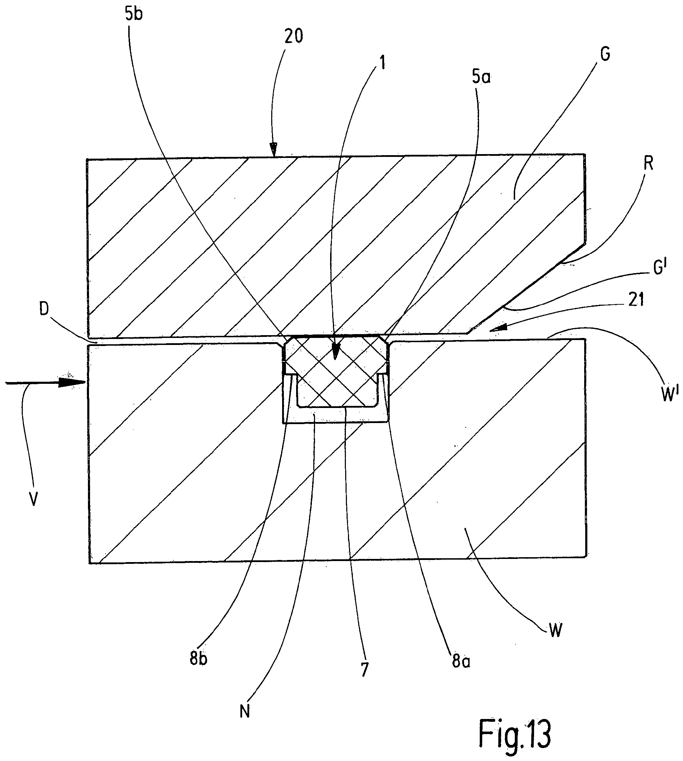

In den Figuren 12 und 13 ist ein zweites Ausführungsbeispiel einer Rechteckdichtung 1 dargestellt, wobei der Grundaufbau der Rechteckdichtung 1 des zweiten Ausführungsbeispiels demjenigen des ersten Ausführungsbeispiels entspricht, so dass gleiche oder einander entsprechende Bauteile mit gleichen Bezugszeichen versehen und nicht mehr näher beschrieben werden. Der wesentliche Unterschied zwischen dem ersten und dem zweiten Ausführungsbeispiel besteht darin, dass bei letzterem die beiden Flankenflächen 4a und 4b stufig ausgeführt sind, so dass infolge dieser Stufen 8a und 8b der Flankenflächen 4a und 4b die in axialer Richtung gemessene Breite der Mantelfläche 3 geringer als die Breite der Basisfläche 7 des Dichtkörpers 2 ist. Hierdurch wird eine hydrostatische Entlastungsstruktur ausgebildet. Eine der Dichtungsanordnung 20 des ersten Ausführungsbeispiels entsprechende, die Rechteckdichtung 1 des zweiten Ausführungsbeispiels verwendende Dichtungsanordnung 20 ist wiederum in Figur 13 gezeigt. Die zur Figur 11 gemachten Erläuterungen gelten hier entsprechend.

In der Mantelfläche 3 der Rechteckdichtung 1 des ersten und des zweiten Ausführungsbeispiels können optional weitere hydrodynamische oder hydrostatische Entlastungsstrukturen vorgesehen sein.

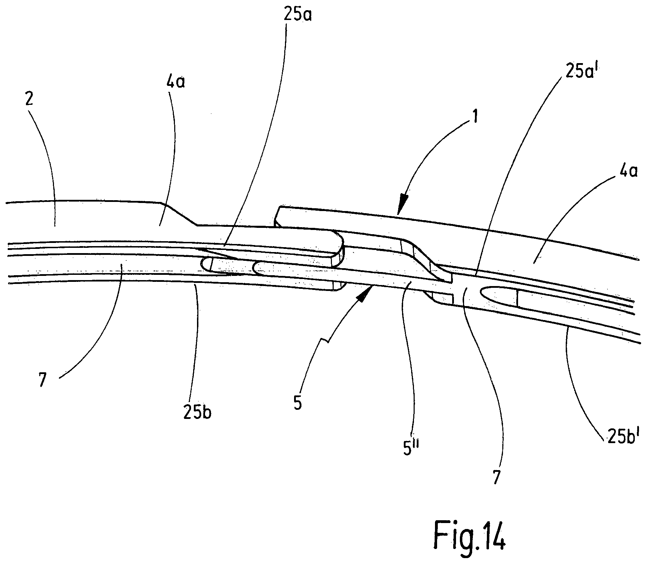

In Figur 14 ist ein drittes Ausführungsbeispiel einer Rechteckdichtung 1 dargestellt, wobei einander entsprechende Bauteile mit den gleichen Bezugszeichen versehen und nicht mehr näher beschrieben werden. Das in der vorstehend genannten Figur gezeigte Ausführungsbeispiel stellt eine innenspannende Rechteckdichtung 1 dar. Eine derartige Rechteckdichtung 1 wird in einer Nut der die Durchführung 21 begrenzenden Innenwand G' des Gehäuses G angeordnet und die Welle W wird folglich durch den durch die innere Mantelfläche 7 des Dichtkörpers 2 der Rechteckdichtung 1 begrenzten Innenraum durchgeschoben. Die äußere Mantelfläche 3 ist im montierten Zustand der Rechteckdichtung 1 in der Nut der Innenwand G' des Gehäuses G aufgenommen und weist folglich beim dritten Ausführungsbeispiel vorzugsweise die Erhebungen 6 auf.

Die Rechteckdichtung 1 besitzt im Übergangsbereich zwischen den Flankenflächen 4a und 4b und der inneren Mantelfläche 7 vorgesehene Einführelemente 25a bzw. 25b, welche den Einführelementen 5a und 5b der ersten beiden Ausführungsbeispiele entsprechen. Beim Einführen der Welle W in die in der Nut der Innenwand G' montierte Rechteckdichtung 1 tritt dann der stirnseitig vorhandene Randbereich der Welle - abhängig von der Orientierung der Rechteckdichtung 1 - auf eines der auch hier vorzugsweise als Einführfasen 25a' und 25b' ausgebildeten Einführelemente 25a und 25b auf. Der Gefahr der Beschädigung der Dichtkontur und/oder der Dichtmasse des Dichtkörpers 2 wird somit wieder entgegengewirkt.

Auch hier ist wieder vorgesehen, dass vorzugsweise die Rechteckdichtung 1 des dritten Ausführungsbeispiels an beiden Flankenflächen 4a und 4b jeweils ein Einführelement 25a bzw. 25b aufweist, so dass auch hier auf die Orientierung der Rechteckdichtung 1 beim Einsetzen nicht geachtet werden muss. Die radiale Erstreckung der Einführelemente ist hierbei wiederum derart, dass diese vorzugsweise in radialer Richtung an der Stelle beginnen, wo der Dichtkörper 2 der Rechteckdichtung 1 über den Rand der in der Innenwand G' vorgesehenen Nut hervortritt, und dass sich mindestens ein Einführelement 25a, 25b bis zur inneren Mantelfläche 7 erstreckt. Auch hier ist es - wie auch bei den beiden ersten Ausführungsbeispielen - nicht erforderlich, dass der Verlauf des oder der Einführelemente 25a, 25b über diesen gesamten Bereich geradlinig schräg verläuft. Auch hier ist eine Variation der Gestalt möglich.

Es ist natürlich auch möglich, dass eine Rechteckdichtung 1 sowohl mindestens ein der äußeren Mantelfläche 3 zugeordnetes Einführelement 5a und/oder 5b als auch mindestens ein der inneren Mantelfläche 7 zugeordnetes Einführelement 25a und/oder 25b aufweist. Die derartig ausgestaltete Dichtung ist in den Figuren 1 sowie 8 bis 10 dargestellt. Sie eignet sich daher in vorteilhafter Art und Weise sowohl zur Aufnahme in einer Nut N der Welle W als auch in einer Nut der Innenwand G' des Gehäuses G.

Zusammenfassend ist festzuhalten, dass durch die beschriebenen Maßnahmen eine Rechteckdichtung 1 ausgebildet wird, die sich dadurch auszeichnet, dass an einer oder beiden Flankenflächen 4a und/oder 4b jeweils ein zumindest eines Teils des Umfangs des Dichtkörpers 2, vorzugsweise entlang des gesamten Umfangs desselben, verlaufende Einführelemente 5a und/oder 5b bzw. 25a und/oder 25b vorgesehen sind. Diese Maßnahme besitzt den Vorteil, dass hierdurch die Gefahr, dass bei der Montage der Rechteckdichtung 1 in der Durchführung 21 der Dichtungsanordnung 20, der Dichtkörper 2 beschädigt wird, zumindest reduziert wird. Vorzugsweise ist vorgesehen, dass die Einführelemente 5a, 5b bzw. 25a und/oder 25b an beiden Flankenbereichen 4a und 4b vorgesehen sind. Eine derartige Maßnahme besitzt den Vorteil, dass hierdurch beim Einsetzen der Rechteckdichtung 1 in die Nut N nicht mehr auf die Orientierung der Rechteckdichtung 1 geachtet werden muss.

Beim vorstehend beschriebenen Ausführungsbeispiel wurde davon ausgegangen, dass die Rechteckdichtung 1 zur Abdichtung des Dichtspalts D zwischen einer Welle W, also einem rotierenden Bauteil, und einem Gehäuse G, also einem stationären Bauteil, dient. Dies ist nicht zwingend erforderlich. Die beschriebenen Maßnahmen eignen sich in gleicher Weise auch für eine Rechteckdichtung zur Verwendung in einer statischen Dichtungsanordnung 20, die zur Abdichtung einer Durchführung von einem Fluid oder einem Gas dient.

## Patentansprüche

1. Hakenschloss für eine Rechteckdichtung, die einen Dichtkörper (2) und mindestens ein Paar zusammenwirkende Schließelemente (11a, 11b) aufweist, wobei ein erstes Schließelement (11a) hakenförmig ausgebildet und in das komplementär hierzu ausgebildete zweite Schließelement (11b) zum Schließen einer Rechteckdichtung (1) eingreift, wobei das erste Schließelement (11a) eine Zunge (12a) sowie eine Ausnehmung (13a) und das zweite Schließelement (11b) eine weitere Zunge (12b) sowie eine weitere Ausnehmung (13b) besitzt, **dadurch gekennzeichnet, dass** die Ausnehmungen (13a; 13b) jeweils durch einen Boden (13a'; 13b') und eine Wand (13a"; 13b") des verbleibenden Bereich des Dichtkörpers (2) ausgebildet sind, dass im Schließzustand des Hakenschlosses (10) in radialer Richtung die Zunge (12a) des ersten Schließelements (11a) in die korrespondierende Ausnehmung (13b) des zweiten Schließelements (11b) und die Zunge (12b) des zweiten Schließelements (11b) in die korrespondierende Ausnehmung (13a) des ersten Schließelements (11a) eintaucht, dass in axialer Richtung die Zunge (12a) des ersten Schließelements (11a) über der Wand (13b") der Ausnehmung (13b) des zweiten Schließelements (11 b) und die Zunge (12b) des zweiten Schließelements (11a) über der Wand (13a") des ersten Schließelements (11a) liegt, dass in radialer Richtung die Zunge (12a) über dem Boden (13b') der Ausnehmung (13b) des zweiten Schließelements (11b) und die weitere Zunge (12b) über dem Boden (13a') der Ausnehmung (13a) des ersten Schließelements (11a) liegt, und dass mindestens eine der Zungen (12a; 12b) ein radial nach innen vorspringendes Rastelement (14a; 14b) und die korrespondierende Ausnehmung (13b; 13a) eine Rastaufnahme (15b; 15a) für dieses Rastelement (14a; 14b) aufweist, in welche das Rastelement (14a; 14b) zum Schließen des Hakenschlosses (10) einbringbar ist.

2. Hakenschloss nach Anspruch 1, **dadurch gekennzeichnet, dass** die Schließelemente (11a, 11b) spiegelsymmetrisch angeordnet sind.

3. Hakenschloss nach einem der vorangehenden Ansprüche, **dadurch gekennzeichnet, dass** die Länge einer Zunge (12a; 12b) der Länge der mit dieser zusammenwirkenden Ausnehmung (13b; 13a) entspricht.

4. Hakenschloss nach einem der vorangehenden Ansprüche, **dadurch gekennzeichnet, dass** die Summe der radialen Erstreckung der mindestens einen Zunge (12a; 12b) und der Tiefe der mit ihr zusammenwirkenden Ausnehmung (13b; 13a) gleich der radialen Erstreckung des Dichtkörpers (2) der Rechteckdichtung (1) ist.

5. Rechteckdichtung zur Abdichtung einer Durchführung, die einen Dichtkörper (2) mit einer Mantelfläche (3), zwei Flankenflächen (4a, 4b) sowie eine Basisfläche (7) sowie ein Schloss (10) zum Schließen des Dichtkörpers (2) aufweist, **dadurch gekennzeichnet, dass** das Schloss als ein Hakenschloss (10) nach einem der Ansprüche 1 bis 4 ausgebildet ist.

6. Rechteckdichtung nach Anspruch 5, **dadurch gekennzeichnet, dass** die Rechteckdichtung (1) zumindest ein in einer Flankenfläche (4a; 4b) vorgesehenes und zumindest entlang eines Teils des Umfangs des Dichtkörpers (2) umlaufendes Einführelement (5a; 5b; 25a; 25b) aufweist.

7. Rechteckdichtung nach Anspruch 6, **dadurch gekennzeichnet, dass** an beiden Flankenflächen (4a, 4b) ein Einführelement (5a; 5b; 25a; 25b) vorgesehen ist.

8. Rechteckdichtung nach einem der vorangehenden Ansprüche, **dadurch gekennzeichnet, dass** mindestens ein Einführelement (5a; 5b; 25a; 25b) als eine Einführfase (5a'; 5b'; 25a'; 25b') ausgebildet ist, und dass vorzugsweise mindestens eine Einführfase (5a'; 5b'; 25a'; 25b') geneigt zwischen der Mantelfläche (3) und der zugehörigen Flankenfläche (4a; 4b) verläuft.

9. Rechteckdichtung nach einem der vorangehenden Ansprüche, **dadurch gekennzeichnet, dass** mindestens eine Flankenfläche (4a; 4b) eine Stufe (8a; 8b) aufweist, und dass vorzugsweise die axiale Breite der Mantelfläche (3) des Dichtkörpers (2) der Rechteckdichtung (1) größer als die axiale Breite der Basisfläche (7) dieses Dichtkörpers (2) ist.

10. Rechteckdichtung nach einem der vorangehenden Ansprüche, **dadurch gekennzeichnet, dass** die Rechteckdichtung (1) mindestens eine Entlastungsstruktur aufweist, und dass die Entlastungsstruktur eine hydrostatische oder hydrodynamische Entlastungsstruktur ist.

11. Dichtungsanordnung zur Abdichtung einer Durchführung (21) für Fluide oder Gase zwischen einem ersten Bauteil (W) und einem zweiten Bauteil (G), wobei im ersten Bauteil (W) eine Nut (N) zur Aufnahme einer Rechteckdichtung (1) vorgesehen ist, **dadurch gekennzeichnet, dass** die Rechteckdichtung (1) nach einem der vorangehenden Ansprüche ausgebildet ist, wobei vorzugsweise die Dichtungsanordnung (20) eine dynamische Dichtungsanordnung ist, dass das erste Bauteil eine Welle (W) und das zweite Bauteil ein Gehäuse (G) ist, und dass die Durchführung (21) als eine Drehdurchführung für die Welle (W) ausgebildet ist.

## Claims

1. Hook lock for a rectangular seal, having a sealing body (2) and at least a pair of cooperating locking elements (12a, 13b; 12b; 13a), whereby a first locking element (11a) is formed hook-like and engages, for closing the rectangular seal (1), the complementary formed second closing element (11b), wherein the first locking element (11a) comprises a tongue (12a) as well as a recess (13a) and the second locking element (11b) comprises a further tongue (12b) as well as a further recess (13b), **characterized in that** the recesses (13a, 13b) are each formed by a bottom (13b'; 13a') and a wall (13b"; 13a") of the remaining part of the sealing body (2), that, in a closed state of the hook lock (10), the tongue (12a) of the first locking element (11a) enters, seen in a radial direction, the corresponding recess (13b) of the second locking element (11b) and the tongue (12b) of the second locking element (11b) enters into the corresponding recess (13a) of the first locking element (11a), that, in an axial direction, the tongue (12a) of the first locking element (11a) lies above the wall (13b'") of the recess (13b) of the second locking element (11b) and the tongue (12b) of the second locking element (11b) lies above the wall (13a") of the first locking element (11a), that, in the radial direction, the tongue (12a) lies above the bottom (13b') of the recess (13b) of the second locking element (11b) and the further tongue (12b) lies above the bottom (13a') of the recess (13a) of the first locking element (11a), and that at least one of the tongues (12a; 12b) comprises a latching element (14a; 14b) projecting inwardly and the corresponding recess (13b; 13a) comprises a latching receptive (15b; 15a) for said latching element (14a; 14b), in which the latching element (14a, 14b) can be inserted for closing the hook lock (10).

2. Hook lock according to claim 1, **characterized in that** the locking elements (11a, 11b) are arranged mirror symmetrically.

3. Hook lock according to one of the previous claims, **characterized in that** the length of a tongue (12a; 12b) corresponds to the length of the recess (13b; 13a) cooperating with it.

4. Hook lock according to one of the previous claims, **characterized in that** the sum of the radial extensions of the at least one tongue (12a; 12b) and the depth of the recess (13b; 13a) cooperating with it equals the radial extension of the sealing body (2) of the rectangular seal (1).

5. Rectangular seal for sealing a passage, having a sealing body (2) with a lateral surface (3), two flank areas (4a, 4b) and a basic area (7) as well as a lock (10) for closing the sealing body (2), **characterized in that** the lock is formed as a hook lock (10) according to one of the claims 1 to 4.

6. Rectangular seal according to claim 5, **characterized in that** the rectangular seal (1) comprises at least one lead element (5a; 5b; 25a; 25b) being arranged in a flank area (4a; 4b) and extending at least along a part of the circumference of the sealing body (2).

7. Rectangular seal according to claim 6, **characterized in that** on both flank areas (4a, 4b) a lead element (5a; 5b; 25a; 25b) is provided.

8. Rectangular seal according to one of the previous claims, **characterized in that** at least one lead element (5a; 5b; 25a; 25b) is provided as a lead chamfer (5a'; 5b'; 25a'; 25b'), and that preferably at least one lead chamfer (5a'; 5b'; 25a'; 25b') runs inclined between the lateral surface (3) and the corresponding flank area (4a, 4b).

9. Rectangular seal according to one of the previous claims, **characterized in that** at least one flank area (4a; 4b) comprises a step (8a; 8b), and that preferably the axial width of the lateral surface (3) of the sealing body (2) of the rectangular seal (1) is greater than the axial width of the basic area (7) of the sealing body (2).

10. Rectangular seal according to one of the previous claims, **characterized in that** the rectangular seal (1) has got at least one relief structure, and that the relief structure is a hydrostatic or hydrodynamic relief structure.

11. Sealing assembly for sealing a passage (21) for fluids or gases between a first component (W) and a second component (G), wherein in the first component (W) a notch (N) for receiving a rectangular seal (1) is provided, **characterized in that** the rectangular seal (1) is provided according to one of the previous claims, whereby preferably the sealing assembly (20) is a dynamic sealing assembly, whereby the first component is an axle (W) and the second component is a housing (G), and that the passage (21) is provided as a rotary feedthrough for the axle (W).

## Revendications

1. Serrure à crochet pour un joint d'étanchéité rectangulaire qui présente un corps étanche (2) et au moins une paire d'éléments de fermeture (11a, 11b) coopérants, dans laquelle un premier élément de fermeture (11a) est réalisé en forme de crochet et vient en prise avec le second élément de fermeture (11b) réalisé de manière complémentaire à celui-ci pour la fermeture d'un joint d'étanchéité rectangulaire (1), dans laquelle le premier élément de fermeture (11a) possède une languette (12a) ainsi qu'un évidement (13a) et le second élément de fermeture (11b), une autre languette (12b) ainsi qu'un autre évidement (13b), **caractérisée en ce que** les évidements (13a ; 13b) sont réalisés respectivement par un fond (13a'; 13b') et une paroi (13a" ; 13b") de la zone restante du corps étanche (2), que dans l'état de fermeture de la serrure à crochet (10) dans le sens radial, la languette (12a) du premier élément de fermeture (11a) s'enfonce dans l'évidement (13b) correspondant du second élément de fermeture (11b) et la languette (12b) du second élément de fermeture (11b), dans l'évidement (13a) correspondant du premier élément de fermeture (11a), que dans le sens axial la languette (12a) du premier élément de fermeture (11a) se trouve au-dessus de la paroi (13b") de l'évidement (13b) du second élément de fermeture (11b) et la languette (12b) du second élément de fermeture (11a), au-dessus de la paroi (13a") du premier élément de fermeture (11a), que dans le sens radial la languette (12a) se trouve au-dessus du fond (13b' de l'évidement (13b) du second élément de fermeture (11b) et l'autre languette (12b), au-dessus du fond (13a') de l'évidement (13a) du premier élément de fermeture (11a), et qu'au moins une des languettes (12a ; 12b) présente un élément d'encliquetage (14a ; 14b) en saillie radialement vers l'intérieur et l'évidement (13b ; 13a) correspondant, un logement d'encliquetage (15b ; 15a) pour cet élément d'encliquetage (14a ; 14b) dans lequel l'élément d'encliquetage (14a ; 14b) peut être introduit pour la fermeture de la serrure à crochet (10).

2. Serrure à crochet selon la revendication 1, **caractérisée en ce que** les éléments de fermeture (11a, 11b) sont agencés de manière symétrique.

3. Serrure à crochet selon l'une quelconque des revendications précédentes, **caractérisée en ce que** la longueur d'une languette (12a ; 12b) correspond à la longueur de l'évidement (13b ; 13a) coopérant avec celle-ci.

4. Serrure à crochet selon l'une quelconque des revendications précédentes, **caractérisée en ce que** la somme de l'étendue radiale de l'au moins une languette (12a ; 12b) et de la profondeur de l'évidement (13b ; 13a) coopérant avec celle-ci est identique à l'étendue radiale du corps étanche (2) du joint d'étanchéité rectangulaire (1).

5. Joint d'étanchéité rectangulaire pour rendre étanche un passage, qui présente un corps étanche (2) avec une surface enveloppe (3), deux surfaces de flanc (4a, 4b) ainsi qu'une surface de base (7) ainsi qu'une serrure (10) pour la fermeture du corps étanche (2), **caractérisé en ce que** la serrure est réalisée comme une serrure à crochet (10) selon l'une quelconque des revendications 1 à 4.

6. Joint d'étanchéité rectangulaire selon la revendication 5, **caractérisé en ce que** le joint d'étanchéité rectangulaire (1) présente au moins un élément d'introduction (5a ; 5b ; 25a ; 25b) prévu dans une surface de flanc (4a ; 4b) et tournant au moins le long d'une partie de la périphérie du corps étanche (2).

7. Joint d'étanchéité rectangulaire selon la revendication 6, **caractérisé en ce qu'**un élément d'introduction (5a ; 5b ; 25a ; 25b) est prévu au niveau des deux surfaces de flanc (4a, 4b).

8. Joint d'étanchéité rectangulaire selon l'une quelconque des revendications précédentes, **caractérisé en ce qu'**au moins un élément d'introduction (5a ; 5b ; 25a ; 25b) est réalisé comme un chanfrein d'introduction (5a' ; 5b' ; 25a' ; 25b'), et que de préférence au moins un chanfrein d'introduction (5a' ; 5b' ; 25a' ; 25b') s'étend de manière inclinée entre la surface enveloppe (3) et la surface de flanc (4a ; 4b) associée.

9. Joint d'étanchéité rectangulaire selon l'une quelconque des revendications précédentes, **caractérisé en ce qu'**au moins une surface de flanc (4a ; 4b) présente un étage (8a ; 8b), et que de préférence la largeur axiale de la surface enveloppe (3) du corps étanche (2) du joint d'étanchéité rectangulaire (1) est supérieure à la largeur axiale de la surface de base (7) de ce corps étanche (2).

10. Joint d'étanchéité rectangulaire selon l'une quelconque des revendications précédentes, **caractérisé en ce que** le joint d'étanchéité rectangulaire (1) présente au moins une structure de détente, et que la structure de détente est une structure de détente hydrostatique ou hydrodynamique.

11. Agencement de joint d'étanchéité pour rendre étanche un passage (21) pour des fluides ou des gaz entre un premier composant (W) et un second composant (G), dans lequel une rainure (N) est prévue dans le premier composant (W) pour la réception d'un joint d'étanchéité rectangulaire (1), **caractérisé en ce que** le joint d'étanchéité rectangulaire (1) est réalisé selon l'une quelconque des revendications précédentes, dans lequel de préférence l'agencement de joint d'étanchéité (20) est un agencement de joint d'étanchéité dynamique, que le premier composant est un arbre (W) et le second composant, un boîtier (G) et que le passage (21) est réalisé comme un passage rotatif pour l'arbre (W).
